(19) Europäisches Patentamt
European Patent Office
Office européen des brevets

(11) **EP 4 428 395 A1**

(12) **EUROPÄISCHE PATENTANMELDUNG**

(43) Veröffentlichungstag:
**11.09.2024 Patentblatt 2024/37**

(21) Anmeldenummer: **24160757.1**

(22) Anmeldetag: **01.03.2024**

(51) Internationale Patentklassifikation (IPC):
**F16H 47/02** *(2006.01)* **F16H 61/4157** *(2010.01)*
**F16H 61/444** *(2010.01)*

(52) Gemeinsame Patentklassifikation (CPC):
**F16H 61/4157; F16H 47/02; F16H 61/444;**
F16H 59/44; F16H 2047/025

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **06.03.2023 DE 102023201973**

(71) Anmelder: **Robert Bosch GmbH**
**70442 Stuttgart (DE)**

(72) Erfinder:
• **Mueller, Matthias**
**89129 Langenau (DE)**
• **Barrera Villalpando, Abraham**
**89091 Lehr Ulm (DE)**
• **Werner, Franz**
**89129 Langenau (DE)**
• **Brix, Norman**
**89340 Leipheim (DE)**
• **Herrmann, Ronny**
**89129 Langenau (DE)**
• **Isfort, Ole**
**89312 Guenzburg (DE)**
• **Klee, Hannes**
**89233 Neu-Ulm (DE)**
• **Ilk, Erich**
**86169 Augsburg (DE)**
• **Vogel, Dieter**
**89160 Dornstadt (DE)**
• **Arcolia, Alessandro**
**15121 Alessandria (IT)**
• **Alberti, Andrea**
**89077 Ulm (DE)**

(54) **VERFAHREN ZUR ANSTEUERUNG EINES HYDROSTATISCHEN ANTRIEBS**

(57)  Die vorliegende Erfindung betrifft ein Verfahren zur Ansteuerung eines hydrostatischen Fahrantriebes (1) einer mobilen Arbeitsmaschine, wobei der hydrostatische Fahrantrieb mit einer ersten Hydromaschine (4) mit verstellbarem Verdrängungsvolumen und mit einer zweiten Hydromaschine (6) und einer dritten Hydromaschine (8) mit jeweils verstellbaren Verdrängungsvolumen versehen ist, wobei die erste Hydromaschine mit einer Antriebsmaschine koppelbar oder gekoppelt ist, wobei die zweite Hydromaschine (6) mit mindestens einem anzutreibenden Rad oder einer anzutreibenden Kette oder Achse mittels einer Kupplung (38) drehverbindbar ist, wobei die dritte Hydromaschine (8) mit dem mindestens einen anzutreibenden Rad oder der anzutreibenden Kette oder Achse drehverbunden ist, wobei die Kupplung (38) unter Berücksichtigung einer Fahrgeschwindigkeit der mobilen Arbeitsmaschine, oder einer Größe, die von dieser abhängig ist, gesteuert wird, wobei das Verfahren folgende Schritte umfasst:

a. Erfassen eines Bremszustandes B oder eines Reversierzustandes R und dass die Kupplung offen ist;
b. Erfassen einer Bremsleistung des hydrostatischen Fahrantriebes (1);
c. Vergleichen der Bremsleistung mit einem Grenzwert;
d. Anfordern einer Schließung der Kupplung, falls die

Bremsleistung größer als den Grenzwert ist.

Fig. 1

**Beschreibung**

TECHNISCHER BEREICH

Die Erfindung betrifft ein Verfahren zur Ansteuerung eines hydrostatischen Antriebs, vorzugsweise einer Arbeitsmaschine. Darüber hinaus betrifft diese Erfindung eine Steuereinheit, eine Arbeitsmaschine, die die Steuereinheit umfasst und ein Computerprogramm.

STAND DER TECHNIK

Es sind hydrostatische Fahrantriebe für mobile Arbeitsmaschinen bekannt, bei denen eine Hydropumpe und ein oder mehrere Hydromotoren in einem geschlossenen hydraulischen Kreis miteinander verbunden sind. Die Hydropumpe wird von einem Verbrennungsmotor - z.B. einem Dieselmotor - angetrieben, und die Hydromotoren treiben schließlich die mobile Arbeitsmaschine - z.B. über ein jeweiliges Rad - an.

Die Hydropumpe und die Hydromotoren derartiger Fahrantriebe sind oft in ihrem Fördervolumen verstellbar. Damit kann z. B. bei konstanter Drehzahl des Verbrennungsmotors der von der Hydropumpe geförderte Volumenstrom im geschlossenen Kreis verändert werden und damit eine Abtriebsdrehzahl der Hydromotoren bzw. der Räder - also eine Fahrgeschwindigkeit der mobilen Arbeitsmaschine - verstellt werden.

Hydrostatische Fahrantriebe haben sehr viele Anwendungen, z.B. in der Landwirtschaft, wo die Arbeitsmaschine neben der Fahrfunktion auch eine Arbeitsfunktion ausführen soll. Der Feldhäcksler ist ein Beispiel davon. Der Feldhäcksler ist ein landwirtschaftliches Gerät zur Aufnahme, Zerkleinerung und Verladung von Erntegut wie Gras, Luzerne oder Mais, insbesondere bei der Zubereitung von Silage bzw. Ganzpflanzensilage.

Um den Übersetzungsbereich eines Fahrantriebs zu vergrößern, sind beispielsweise hydrostatische Getriebe mit mindestens zwei fluidisch parallel betriebenen Hydromotoren bekannt (als 2+1 Getriebe bezeichnet). Deren Triebwellenleistung kann über ein Summierungsgetriebe des hydrostatischen Getriebes addiert und beispielsweise an eine Fahrzeugachse übertragen werden. So sind beispielsweise bei geringer Fahrgeschwindigkeit beide Hydromotoren parallel in Betrieb und erlauben damit eine hohe Zugkraft. Bei vorgegebener Fördermenge der Hydropumpe und vor dem Hintergrund, dass die Verringerung der Schluckvolumina der Hydromotoren einen abnehmenden Wirkungsgrad mit sich bringt, ist die mit zwei Motoren erreichbare Fahrgeschwindigkeit begrenzt.

Zum Erreichen eines Fahrbereiches höherer Fahrgeschwindigkeit kann daher einer der Hydromotoren auf Verdrängungsvolumen null verstellt und vom Abtrieb mittels einer Kupplung getrennt werden. Somit wird der vollständige Volumenstrom der Hydropumpe über den verbleibenden, meist kleineren Hydromotor geleitet, was höhere Drehzahlen und somit höhere Fahrgeschwindigkeiten ermöglicht.

Das bedeutet, dass bei hohen Zugkraftanforderungen im niedrigeren Geschwindigkeitsbereich ein zweiter Hydromotor zugeschaltet wird. Bei höheren Geschwindigkeiten und niedrigeren Zugkraftanforderungen ist der zweite Motor abgeschaltet (d.h. er ist zu Null geschwenkt und durch eine Kupplung vom Abtrieb getrennt). Das Zu- und Abschalten der Kupplung und damit des Motors erfolgt durch eine automatisierte Strategie.

Bekannte Strategien zum Zu- und Abschalten basieren in der Regel auf fahrpedalabhängigen Schaltgeschwindigkeiten. Damit lassen sich einfache "Use Cases" bei Straßenfahrt abbilden. Typischerweise werden solche Fahrantriebe in Baumaschinen wie Radladern und Telehandlern genutzt, die neben dem reinen Fahren auch für anspruchsvolle "Use Cases" (z.B. Ladeoperationen, Reversieren, Inching, Stehenbleiben am Hang) eingesetzt werden.

Zusätzlich hat das 2+1 Getriebe die Eigenschaft, dass das Zuschalten des temporären Motors bei hohen Geschwindigkeiten Synchronisationsmoment erfordert und deshalb spürbar und hörbar ist. Bisherige Strategien sorgen nicht dafür, dass das Zuschalten nur wenn es notwendig ist und bei möglichst niedrigen Drehzahlen erfolgt.

Dem gegenüber liegt der Erfindung die Aufgabe zu Grunde, ein Verfahren zu entwickeln, bei dem die Zuschaltung nur durchgeführt wird, wenn sie tatsächlich notwendig zum Erreichen der geforderten Zugkraft ist, sodass Schaltungen bei hohen Differenzdrehzahlen so weit wie möglich vermieden werden.

KURZFASSUNG

Gemäß einer Ausführungsform der vorliegenden Erfindung wird ein Verfahren zur Ansteuerung eines hydrostatischen Fahrantriebes (1) einer mobilen Arbeitsmaschine bereitgestellt, wobei der hydrostatische Fahrantrieb mit einer ersten Hydromaschine (4) mit verstellbarem Verdrängungsvolumen und mit einer zweiten Hydromaschine (6) und einer dritten Hydromaschine (8) mit jeweils verstellbaren Verdrängungsvolumen versehen ist, wobei die erste Hydromaschine mit einer Antriebsmaschine koppelbar oder gekoppelt ist, wobei das von der ersten Hydromaschine kommende Druckmittel an die zweite und an die dritte Hydromaschine (6, 8), die parallel zueinander angeordnet sind, gefördert werden kann, wobei die zweite Hydromaschine (6) mit mindestens einem anzutreibenden Rad oder einer anzutreibenden Kette oder Achse mittels einer Kupplung (38) drehverbindbar ist, wobei die dritte Hydromaschine (8) mit dem mindestens einen anzutreibenden Rad oder der anzutreibenden Kette oder Achse drehverbunden ist, wobei die Kupplung (38) unter Berücksichtigung einer Fahrgeschwindigkeit der mobilen Arbeitsmaschine, oder einer Größe, die von dieser abhängig ist, gesteuert wird,

**dadurch gekennzeichnet, dass** das Verfahren folgende Schritte umfasst:

a. Erfassen einer Information, die beschreibt, dass der hydrostatische Fahrantrieb sich in einem Bremszustand B oder in einem Reversierzustand R befindet und dass die zweite Hydromaschine (6) nicht mit dem mindestens einen anzutreibenden Rad oder der anzutreibenden Kette oder Achse mittels der Kupplung (38) drehverbunden ist;
b. Erfassen einer Bremsleistung des hydrostatischen Fahrantriebes (1) oder einer Größe, die von die von dieser abhängig ist;
c. Vergleichen der Bremsleistung des hydrostatischen Fahrantriebes (1) oder der Größe, die von die von dieser abhängig ist, mit einem Grenzwert;
d. Anfordern einer Schließung der Kupplung, sodass die zweite Hydromaschine (6) mit dem mindestens einen anzutreibenden Rad oder der anzutreibenden Kette oder Achse mittels der Kupplung (38) drehverbunden wird, falls die Bremsleistung des hydrostatischen Fahrantriebes (1) oder die Größe, die von die von dieser abhängig ist, größer als den Grenzwert ist.

Da die erste, die zweite und die dritte Hydromaschine theoretisch sowohl als Hydromotor als auch als Hydropumpe benutzt werden können, werden sie in den Ansprüchen generisch als Hydromaschine bezeichnet. Darüber hinaus wird aus dem genannten Grund in den Ansprüchen immer von einem Volumenstrom gesprochen (und nicht spezifisch z.B. als Schluckvolumen von einem Hydromotor bezeichnet). Die Größe, die von der Bremsleistung abhängig ist, kann ein Druck an der Hydropumpe (erste Hydromaschine) oder ein Drehmoment sein. Falls die Arbeitsmaschine verzögert, wird ein positiver Wert für den Druck an der Hydropumpe (Deltadruck zwischen Druckseite und Saugseite) genommen.

KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

Fig. 1 zeigt einen hydraulischen Schaltplan eines hydrostatischen Fahrantriebes gemäß dem Stand der Technik,

Fig. 2 zeigt ein Verfahren zur Ermittlung eines Schwellenwertes für die Umschaltung eines 2+1 Getriebe unter Berücksichtigung eines Inchbefehls gemäß einer Ausführungsform der vorliegenden Erfindung;

Fig. 3 zeigt ein Verfahren für die Anpassung des Schwellenwertes gemäß einer Ausführungsform der vorliegenden Erfindung;

Fig. 4 zeigt ein Verfahren für die Anpassung des Schwellenwertes gemäß einer weiteren Ausführungsform der vorliegenden Erfindung.

DETAILLIERTE BESCHREIBUNG

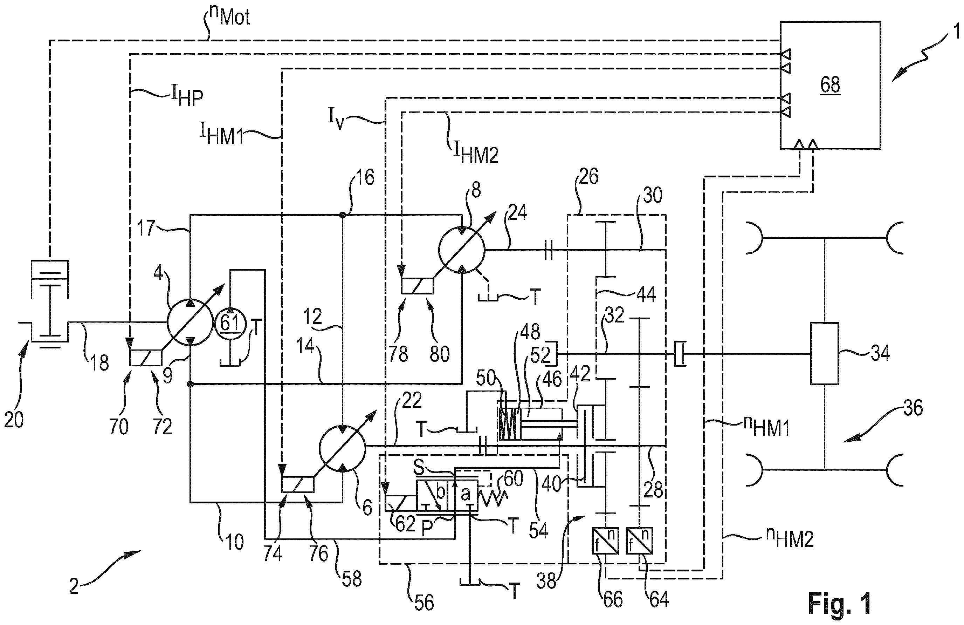

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.
Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.
Gemäß Figur 1 hat ein Fahrantrieb 1 ein hydrostatisches Getriebe 2 mit einer im Zugbetrieb des Fahrantriebs 1 als Hydropumpe arbeitenden Hydromaschine 4 und zwei im genannten Zugbetrieb als Hydromotoren arbeitende Hydromaschinen 6 und 8. Der Fahrantrieb wird bei einer Arbeitsmaschine benutzt (wie Radlader, Telehendler usw.). Beide Hydromotoren 6, 8 sind mit der Hydropumpe 4 über Arbeitsleitungen 10 und 12 einerseits und 14 und 16 andererseits fluidisch parallel in einem geschlossenen hydraulischen Kreis verbunden. Die Hydromaschinen 4, 6, 8 sind in ihrem Verdrängungsvolumen verstellbar, wobei sie jeweils als Axialkolbenmaschine in Schrägscheibenbauweise oder in Schrägachsenbauweise ausgebildet sind. In der Regel ist der maximale Volumenstrom (Schluckvolumen) des ersten Hydromotors 6 deutlich größer als der von dem zweiten Hydromotor 6. Das Verhältnis zwischen den maximalen Volumenströmen der zwei Hydromotoren ist zwischen 1.5 bis 2.5.
Es wird darauf hingewiesen, dass auch wenn sowohl die zweite und als auch die dritte Hydromaschine 6, 8 mit verstellbaren Verdrängungsvolumen in Figur 1 dargestellt wurden, diese Erfindung auch benutzt werden kann, wenn die zweite und/oder die dritte Hydromaschine mit konstanten Verdrängungsvolumen versehen ist.
Die Hydropumpe 4 ist über ihre Triebwelle 18 mit einer als Dieselmotor ausgestalteten Antriebsmaschine 20 verbunden. Ein erster Hydromotor 6 der beiden Hydromotoren 6, 8 hat eine erste Triebwelle 22 und der zweite Hydromotor 8 hat eine zweite Triebwelle 24. Dem hydrostatischen Getriebe 2 ist als mechanisches Getriebe ein Summationsgetriebe 26 mit zwei Eingangswellen 28 und 30 nachgeschaltet. Die erste Eingangswelle 28 ist dabei drehfest mit der ersten Triebwelle 22 und die zweite Eingangswelle 30 drehfest mit der zweiten Triebwelle 24 verbunden. Eine Ausgangswelle 32 des Summationsgetriebes 26 ist drehfest mit einem Differential 34 einer Antriebsachse 36 verbunden.

Das Summationsgetriebe 26 umfasst eine als Lamellenkupplung ausgebildete Kupplung 38. Diese hat einen ersten Kupplungsabschnitt 40, der drehfest mit der ersten Eingangswelle 28 verbunden ist. Zudem hat sie einen zweiten Kupplungsabschnitt 42, der über eine, rein schematisch dargestellte, Zahnradanordnung 44 mit der zweiten Eingangswelle 30 des Summationsgetriebes 26 drehfest verbunden ist. Durch Betätigung der Kupplung 38, das mit einem Einrücken des zweiten Kupplungsabschnittes 42 einhergeht, sind die beiden Eingangswellen 28 und 30 und damit die beiden Triebwellen 22 und 24 drehfest miteinander verbindbar.

Zur Betätigung der Kupplung 38 ist ein als Hydrozylinder ausgestaltetes Betätigungselement 46 vorgesehen. Dessen Kolben 48 ist über eine Kolbenstange zug- und schubfest mit dem zweiten Kupplungsabschnitt 42 gekoppelt. Der Hydrozylinder 46 hat einen Kolbenraum, in dem eine Druckfeder 50 angeordnet ist. Der Kolbenraum ist dabei permanent über eine Tankleitung mit einem Tank T verbunden. Kolbenstangenseitig weist der Hydrozylinder 46 einen Ringraum 52 auf, der über eine Steuerdruckleitung 54 mit einem Anschluss S eines als Druckregelventil ausgestalteten Regelgerätes 56 verbunden ist. Letztgenanntes hat einen Druckanschluss P, der über eine Druckleitung 58 mit einer Speisepumpe 61 verbunden ist, die zusammen mit der Hydropumpe 4 von der Triebwelle 18 angetrieben wird. Die Speisepumpe 61 saugt dabei aus dem Tank T Druckmittel an. Des Weiteren hat das Druckregelventil 56 einen Tankanschluss T, der mit dem Tank T verbunden ist.

Das Druckregelventil 56 ist stetig verstellbar und hat zwei Endstellungen a, b. In einer ersten Endstellung a, in der der Ventilkörper über eine Feder 60 vorbelastet ist, ist der Druckanschluss P mit dem Steuerdruckanschluss S verbunden und der Anschluss T ist gegen den Anschluss S abgesperrt. In einer zweiten Endstellung b ist das Druckregelventil 56, genauer gesagt dessen Ventilkörper, über einen Elektromagnet 62 betätigbar. Bei dessen Bestromung, und sofern die zweite Einstellung b vollständig eingenommen wird, ist der Steuerdruckanschluss S mit dem Tankanschluss T verbunden und der Druckanschluss P ist abgesperrt. In der ersten Endstellung a findet somit ausschließlich eine Beschickung oder Befüllung des Ringraumes 52 mit Druckmittel statt, wohingegen in der zweiten Endstellung b ausschließlich eine Entleerung oder Abfuhr von Druckmittel aus dem Ringraum 52 erfolgt. Zwischen den beiden Endstellungen a und b sind Regelstellungen des Ventilkörpers möglich, in denen die Anschlüsse P, S und T in jeweiliger Druckmittelverbindung zueinander stehen. Zur Rückführung des am Steuerdruckanschluss S anstehenden, zu regelnden Steuerdruckes im Ringraum 52, ist der Ringraum 52 über eine Steuerleitung oder einen Steuerkanal fluidisch mit einer Steuerfläche des Ventilkörpers des Druckregelventils 56, die gleichwirkend mit der Feder 60 ist, verbunden.

Das mechanische Getriebe 26 weist weiterhin eine erste Drehzahlerfassungseinheit 64 auf, über die die Drehzahl der ersten Eingangswelle 28 und damit des ersten Kupplungsabschnitts 40 und der ersten Triebwelle 22 erfassbar ist. Über eine zweite Drehzahlerfassungseinheit 66 des mechanischen Getriebes 26 ist die Drehzahl des zweiten Kupplungsabschnittes 42 und damit mittelbar, in Kenntnis der Übersetzung der Zahnradanordnung 44, die Drehzahl der zweiten Eingangswelle 30 und der zweiten Triebwelle 24 erfassbar.

Der Hydropumpe 4 ist ein Regelgerät 70 zugeordnet, das mit einer Verstelleinrichtung 72 zur Verstellung des Verdrängungsvolumens der Hydropumpe 4 zusammenwirkt. Der erste Hydromotor 6 und der zweite Hydromotor 8 haben ein Regelgerät 74 bzw. 78 und eine Verstelleinrichtung 76 bzw. 80.

Die Antriebsmaschine 20, die Regelgeräte 70, 74 und 78, der Elektromagnet 62 sowie die Drehzahlerfassungseinheiten 64, 66 sind jeweils über eine Signalleitung mit der Steuereinrichtung 68 verbunden.

In den folgenden Abschnitten wird ein Verfahren zur Steuerung der zwei Hydromotoren und der Kupplung 38, gemäß einer Ausführungsform der vorliegenden Erfindung beschrieben.

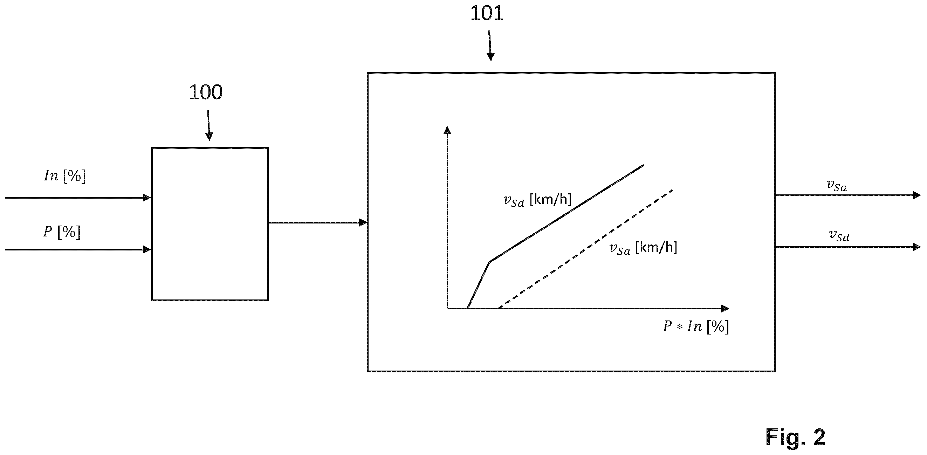

In einem ersten Schritt wird ein Fahrbefehl P, der einer Soll-Fahrgeschwindigkeit oder einer Größe, die von dieser abhängig ist, entspricht, erfasst. Insbesondere kann der Fahrbefehl mit einer Eingabeeinrichtung, vorzugswese ein Fahrpedal, von einem Fahrer der Arbeitsmaschine vorgegeben werden und mit einem Sensor erfasst werden. In einer alternativen Ausführungsform kann die Eingabeeinrichtung ein Joystick oder ein Hebel sein. Das Signal, das durch die Eingabeeinrichtung eingegeben wird, wird vorzugsweise als Verhältnis zwischen einem durch den Fahrer eingegebenen Wert und dem maximalen Wert, der die Eingabeeinrichtung erfassen kann, sein. In so einem Fall wird daher der Fahrbefehl P in Prozent erfasst, wie in Figur 2 dargestellt ist.

Vorteilhaft wird darüber hinaus ein Inchbefehl In, vorzugsweise aus einem Inchpedal, erfasst. Mit dem Inchpedal wird bei hydrostatischen Antrieben eine Trennung des Fahrantriebs von Förder- und Hebeantrieben erreicht. Dieses Pedal sorgt dafür, dass langsame Rangierfahrten (z. B. bei Gabelstaplern oder Radladern) bei gleichzeitig hoher Ladekraft möglich sind. Das Inchpedal dient deswegen dem gefühlvollen Beschleunigen und Abbremsen von Arbeitsmaschinen mit hydrostatischem Antrieb. Ohne Inchfunktion würde die sich erhöhende Motordrehzahl beim Heben von Lasten automatisch zu einer Beschleunigung des Fahrzeuges führen. Das Betätigen des Inchpedals entkoppelt Arbeits- und Antriebsleistung voneinander und ermöglicht dadurch feinfühliges Rangieren. Es gibt kombinierte Inch-Bremspedale. Beim Betätigen eines solchen Pedals wird zuerst die Inchfunktion aktiviert. Wird das Pedal tiefer gedrückt, aktiviert sich die Bremsfunktion des Fahrzeugantriebs. Alternativ werden Inchpedale benutzt, die exklusiv für die Inchfunktion betätigt werden können. Aus diesem Grund wird in dieser Erfindung von einem Inchbefehl gesprochen, da nicht relevant ist, wie der Inchbefehl eingegeben wird (ob durch das Bremspedal oder das Inchpedal).

Figur 2 zeigt ein Beispiel bei dem der Inchbefehl erfasst wird. Es ist dem Fachmann klar, dass diese Erfindung auch ohne die Erfassung des Inchbefehls funktionieren kann. Für den Fall, dass der Inchbefehl erfasst wird, wird in einem ersten Schritt 100 der Inchbefehl In mit dem Fahrbefehl P multipliziert, um einen Fahrbefehl zu erhalten, der den Inchbefehl In berücksichtigt.

In einem weiteren Schritt 101 wird ein Schwellenwert der Fahrgeschwindigkeit der Arbeitsmaschine berechnet, bei dem eine Umschaltung der Kupplung 38 stattfinden soll, wobei die Berechnung unter Berücksichtigung des erfassten Fahrbefehls ausgeführt wird. Für den Fall, dass der Inchbefehl erfasst wurde, wird der im Schritt 100 berechnete Fahrbefehl berücksichtigt.

Die Berechnung wird auf Basis von einer Funktion, vorzugsweise einer Kennlinie, ausgeführt, die den Schwellenwert in Abhängigkeit des Fahrbefehls bestimmt. Für höhere Fahrbefehle wird die Umschaltung, wie in Figur 2 dargestellt ist, bei höheren Fahrgeschwindigkeiten stattfinden, da mehr Drehmoment angefordert wird. Umgekehrt, wird bei niedrigen Fahrbefehlen die Umschaltung bei niedrigen Geschwindigkeiten stattfinden können. In Figur 2 sind zwei Linien dargestellt, von der zwei verschiedene Schwellenwerte ermittelt werden können. Die kontinuierliche Linie bezieht sich auf den Fall, dass die Kupplung 38 geschlossen ist, und wird einen ersten Schwellenwert $v_{sd}$ liefern. Das bedeutet, dass für den Fall, dass die Fahrgeschwindigkeit bei geschlossener Kupplung oberhalb des Schwellenwerts $v_{sd}$ steigt, ein Signal an die Kupplung geschickt wird, um die Kupplung zu öffnen (Schwellenwert-Deaktivierung).

Dagegen bezieht sich die gestrichelte Linie auf den Fall, dass die Kupplung 38 offen ist, und wird einen zweiten Schwellenwert $v_{sa}$ liefern. Das bedeutet, dass für den Fall, dass die Fahrgeschwindigkeit bei offener Kupplung unterhalb des Schwellenwerts $v_{sa}$ sinkt, ein Signal an die Kupplung geschickt wird, um die Kupplung zu schließen (Schwellenwert Aktivierung).

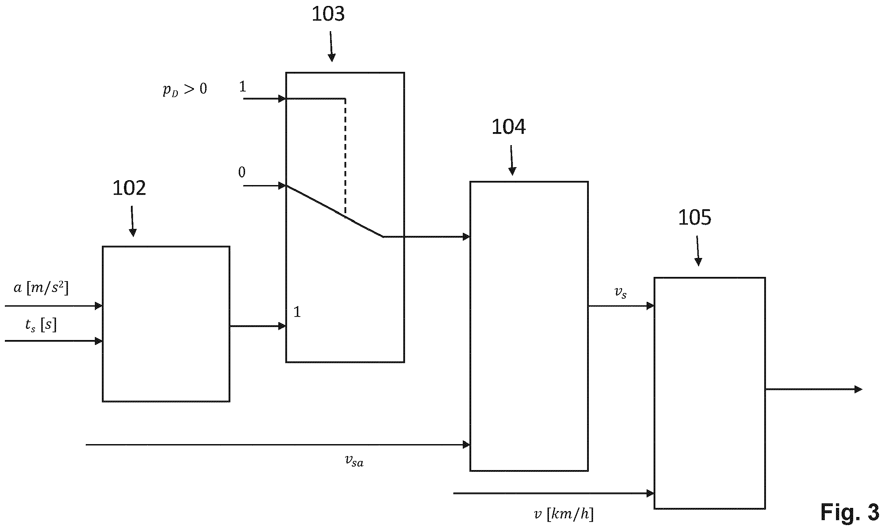

Figur 3 beschreibt die Möglichkeit, den im Schritt 101 berechneten Schwellwert $v_{sa}$ anzupassen, für den Fall, dass der Fahrbefehl einem Absolutwert der Soll-Fahrgeschwindigkeit der Arbeitsmaschine entspricht, der kleiner als ein vorgegebener Wert ist. Der Grund dafür ist, dass bei einem niedrigen Fahrbefehl (Fahrpedal bei 0% oder vergleichbare Werte) gewünscht sein kann, dass beim Stillstand zugeschaltet wird, sodass bei niedrigen Differenzdrehzahlen geschaltet werden kann. Der vorgegebene Wert entspricht vorzugsweise einer Geschwindigkeit der Arbeitsmaschine, die kleiner als 5 km/h ist, noch mehr vorzugsweise kleiner als 3 km/h ist, noch mehr vorzugsweise kleiner als 1 km/h ist, noch mehr vorzugsweise kleiner als 0.5 km/h ist, noch mehr vorzugsweise gleich 0 km/h ist.

Um dieses Ziel zu erreichen, wird in einem Schritt 102 die aktuelle Verzögerung $a$ der Arbeitsmaschine und einer Umschaltzeit $t_s$ ermittelt. Die zwei Werte werden dann miteinander multipliziert.

In dem Schritt 103 wird dann verifiziert, dass die beschriebene Anpassung tatsächlich durchgeführt werden soll. Um das zu Prüfen wird der Druck an der Hydropumpe gemessen und die Fahrtrichtung erfasst. Aus diesen Informationen wird ein Wert $p_D$ ermittelt. Werte von $p_D$ größer als 0 beschreiben eine Situation, bei der die Arbeitsmaschine verzögert, auf Grund eines verzögernden Moments aus dem Antriebsstrang (negativer Leistungsfluss, Schubbetrieb).

Für den Fall, dass $p_D$ größer als 0 ist, wird die Anpassung des Schwellenwert in dem Schritt 104 durchgeführt. Der angepasste Schwellenwert wird mit dieser Formel berechnet:

$$v_s = v_{sa} + a * t_s$$

wobei $v_s$ der angepasste Schwellenwert ist, $v_{sa}$ der berechnete Schwellenwert von Schritt 101 ist, $a$ die aktuelle Verzögerung der Arbeitsmaschine ist und $t_s$ die Umschaltzeit ist.

Unabhängig von dem Fall, ob die Anpassung von Schritt 104 ausgeführt wurde oder nicht, wird in einem weiteren Schritt 105 die aktuelle Fahrgeschwindigkeit v der Arbeitsmaschine mit dem Schwellenwert $v_s$ verglichen. Für den Fall, dass die Fahrgeschwindigkeit kleiner als der Schwellenwert ist, wird ein Signal an die Kupplung 38 geschickt, um die Kupplung zu schließen.

Bezüglich Figur 3 wurde ein Verfahren beschrieben, bei der die Kupplung am Anfang offen ist und geschaut wird, ob die Bedingung, um die Kupplung zu schließen, ausgefüllt wurde. Es ist dem Fachmann klar, dass ein komplett analoges Verfahren angewendet werden kann, für den Fall, dass die Kupplung zu ist und geschaut werden muss, ob die Kupplung geöffnet werden muss. Daher, um Wiederholungen zu vermeiden, wird dieses zusätzliche Verfahren nicht im Detail beschrieben.

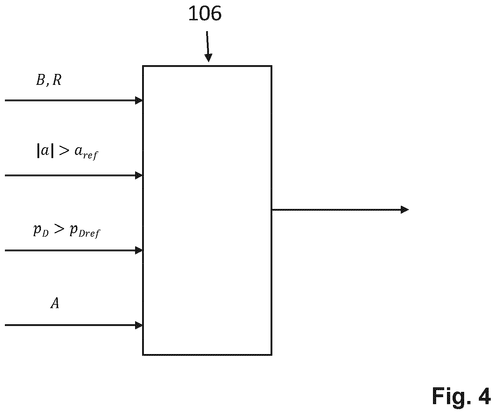

Figur 4 beschreibt eine Logik, die vorzugsweise benutzt werden kann, um beim Reversieren und beim Bremsen ein gewünschtes Verhalten des hydrostatischen Fahrantriebes 1 zu erreichen. Insbesondere beschreibt Figur 4 die Möglichkeit, den im Schritt 101 berechneten Schwellwert $v_{sa}$ indirekt anzupassen (durch die Änderung der Logik).

Es wird oft gewünscht, dass beim Bremsen genug Bremsmoment bereitgestellt wird, sodass der Fahrantrieb in weniger Zeit eine gewünschte Geschwindigkeit erreichen kann. Wie in dem Verlauf der Beschreibung klarer wird, wird durch die Logik von Figur 4 das gewünschte Verhalten erreicht.

Wie schon in dem Verlauf der Beschreibung erläutert wurde, ist im Normalfall die Kupplung bei höheren Geschwindigkeiten offen. Sobald der hydrostatische Antrieb abgebremst wird, wird die Hydropumpe und ggf. der Hydromotor 8 (im Fall eines schwenkbaren Hydromotors 8) mittels des Stromes $I_{HM2}$, der für die Steuerung des Schwenkwinkels des Hydromotors zuständig ist, so verstellt, dass der Hydromotor 8 als Hydropumpe arbeiten kann, sodass an den Abtrieb ein Bremsmoment bereitgestellt wird. Allerdings, da der Motor 8 in der Regel kleiner als der Hydromotor 6 ist, und da sehr oft das angeforderte Bremsmoment sehr hoch ist, wird das Bremsmoment des Hydromotors 8 nicht reichen, um das gewünschte Fahrverhalten zu ermöglichen. Wie schon in der Beschreibung erläutert wurde, wird in der Regel der Hydromotor 6 erst zugeschaltet, wenn die Fahrgeschwindigkeit unterhalb des Schwellenwertes ist. Daher kann es in so einem Fall vorteilhaft sein, wenn der Hydromotor 6 mittels der Kupplung 38 zugeschaltet wird auch bei höheren Geschwindigkeiten.

Die Logik von Figur 4 ermöglicht tatsächlich das Zuschalten des Hydromotors 6 auch bei höheren Geschwindigkeiten, um das gewünschte Fahrverhalten zu ermöglichen. Wie in der Figur dargestellt ist, werden in einem Schritt 106 mehrere Informationen erfasst und es wird geschaut, ob alle erfassten Informationen vorgegebene Bedingungen erfüllen. Für den Fall, dass alle Bedingungen erfüllt sind, wird dann das Zuschalten des Hydromotors 6 von der Steuereinheit 68 angefordert (durch den Strom Iv, der an die Kupplung gegeben wird). Es ist dem Fachmann klar, dass die erfassten Informationen, bzw. die Bedingungen, nur als Beispiel zu betrachten sind und es nicht notwendig ist, dass alle Informationen erfasst werden, bzw. alle Bedingungen erfüllt sind.

Die erste Information bezieht sich auf die Erfassung und auf die Überprüfung, ob sich der hydrostatische Fahrantrieb tatsächlich in einer Bremsbedingung B oder in einer Reversierbedingung R befindet.

Die zweite Information bezieht sich auf die Erfassung und auf die Überprüfung, ob die Verzögerung $a$ der Arbeitsmaschine oberhalb eines Grenzwertes $a_{ref}$ ist. Diese Information, bzw. diese Bedingung, ist wichtig, um zu überprüfen, ob tatsächlich die Unterstützung des Hydromotors 6 gebraucht wird oder nicht. Die Verzögerung $a$ kann entweder eine aktuelle Verzögerung oder eine gewünschte Verzögerung sein.

Die dritte Information ist der Wert $p_D$, der schon im Detail beschrieben wurde. Wie schon gesagt, ist der Wert $p_D$ proportional mit dem Deltadruck an der Hydropumpe und Werte von $p_D$ größer als 0 beschreiben eine Situation, bei der die Arbeitsmaschine verzögert. Die Bedingung für die Zuschaltung des Hydromotors 6 ist, dass der Wert $p_D$, größer als ein Grenzwert $p_{Dref}$ ist. Der Grund dafür ist, dass wenn sich ein zu hoher Druck bei der Hydropumpe bildet (da der Hydromotor 8 allein nicht in der Lage ist, das gewünschte Bremsmoment bereitzustellen), der Hydromotor 6 zugeschaltet werden soll. Alternativ kann eine Bremsleistung oder ein Bremsmoment erfasst werden und mit einem Grenzwert verglichen werden. Da sowohl der Wert $p_D$ als auch das Bremsmoment von der Bremsleistung abhängig sind, wird in den Ansprüchen von einer Bremsleistung gesprochen.

Die vierte Information ist eine Bedingung A, die geprüft werden soll. Diese Bedingung kann beliebig sein.

Ein Beispiel davon ist, dass wenn die Fahrgeschwindigkeit zu hoch ist, empfehlenswert wäre den Hydromotor nicht zuzuschalten. Das bedeutet, dass für so ein Fall, die Zuschaltung des Hydromotors 6 vermieden wird, da die vorgegebene Bedingung (d.h. Fahrgeschwindigkeit innerhalb eines vorgegebenen Bereichs) nicht erfüllt ist. Alternativ kann die Bedingung A eine Temperatur sein. Der Grund dafür ist, dass bei zu hohen Temperaturen die Zuschaltung des Hydromotors vermieden werden soll.

Vorzugsweise, wenn alle die vier beschriebenen Bedingungen erfüllt sind, wird nach dem Schritt 106 ein Signal an die Kupplung durch den Strom Iv vorgegeben, sodass die Kupplung 38 schließen wird.

Das beschriebene Verfahren ist in der Speichereinheit abgelegt und wird durch die Steuereinrichtung 68 ausgeführt.

Das beschriebene Verfahren kann in verschiedenen Arten von Arbeitsmaschinen benutzt werden. Im Wesentlichen kann das Verfahren bei allen Arbeitsmaschinen benutzt werden, die einen hydrostatischen Antrieb und eine ansteuerbare Antriebsmaschine (wie einen Dieselmotor) haben. Anwendungsbeispiele können z.B. ein Feldhäcksler, ein Mähdrescher, eine Schneefräse oder eine Straßenfräse sein.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Auch wenn die vorliegende Erfindung immer in Bezug auf zwei Hydromotoren beschrieben wurde, ist dem Fachmann klar, dass diese Erfindung durch kleine Anpassungen (z.B. Benutzung von zwei verschiedenen Skalierungsfunktionen bei zwei verschiedenen Hydromotoren) auch bei drei oder mehreren Hydromotoren angewendet werden kann.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

**Patentansprüche**

1.　Verfahren zur Ansteuerung eines hydrostatischen Fahrantriebes (1) einer mobilen Arbeitsmaschine, wobei der hydrostatische Fahrantrieb mit einer ersten Hydromaschine (4) mit verstellbarem Verdrängungsvolumen und mit einer zweiten Hydromaschine (6) und einer dritten Hydromaschine (8) versehen ist, wobei die erste Hydromaschine mit einer Antriebsmaschine koppelbar oder gekoppelt ist, wobei das von der ersten Hydromaschine kommende Druckmittel an die zweite und an die dritte Hydromaschine (6, 8), die parallel zueinander angeordnet sind, gefördert werden kann, wobei die zweite Hydromaschine (6) mit mindestens einem anzutreibenden Rad oder einer anzutreibenden Kette oder Achse mittels einer Kupplung (38) drehverbindbar ist, wobei die dritte Hydromaschine (8) mit dem mindestens einen anzutreibenden Rad oder der anzutreibenden Kette oder Achse drehverbunden ist, wobei die Kupplung (38) unter Berücksichtigung einer Fahrgeschwindigkeit der mobilen Arbeitsmaschine, oder einer Größe, die von dieser abhängig ist, gesteuert wird,

**dadurch gekennzeichnet, dass** das Verfahren folgende Schritte umfasst:

a. Erfassen einer Information, die beschreibt, dass der hydrostatische Fahrantrieb sich in einem Bremszustand B oder in einem Reversierzustand R befindet und dass die zweite Hydromaschine (6) nicht mit dem mindestens einen anzutreibenden Rad oder der anzutreibenden Kette oder Achse mittels der Kupplung (38) drehverbunden ist;

b. Erfassen einer Bremsleistung des hydrostatischen Fahrantriebes (1) oder einer Größe, die von Dieser abhängig ist;

c. Vergleichen der Bremsleistung des hydrostatischen Fahrantriebes (1) oder der Größe, die von Dieser abhängig ist, mit einem Grenzwert;

d. Anfordern einer Schließung der Kupplung, sodass die zweite Hydromaschine (6) mit dem mindestens einem anzutreibenden Rad oder der anzutreibenden Kette oder Achse mittels der Kupplung (38) drehverbunden wird, falls die Bremsleistung des hydrostatischen Fahrantriebes (1) oder die Größe, die von Dieser abhängig ist, größer als den Grenzwert ist.

2. Verfahren nach Anspruch 1, wobei weiterhin eine Verzögerung der Arbeitsmaschine erfasst wird, wobei die erfasste Verzögerung mit einem Grenzwert vergleichen wird, wobei in dem Schritt d. die Schließung der Kupplung nur angefordert wird, falls die Verzögerung des hydrostatischen Fahrantriebes (1) größer als den Grenzwert ist.

3. Verfahren nach Anspruch 2, wobei die Verzögerung eine aktuelle Verzögerung der Arbeitsmaschine ist.

4. Verfahren nach Anspruch 2, wobei die Verzögerung eine gewünschte Verzögerung der Arbeitsmaschine ist.

5. Verfahren nach einem der Ansprüche 1 bis 4, wobei weiterhin eine aktuelle Temperatur des hydrostatischen Fahrantriebes (1) erfasst wird, wobei die erfasste Temperatur mit einem Grenzwert vergleichen wird, wobei in dem Schritt d. die Schließung der Kupplung nur angefordert wird, falls die aktuelle Temperatur größer als den Grenzwert ist.

6. Verfahren nach einem der Ansprüche 1 bis 5, wobei weiterhin eine aktuelle Geschwindigkeit der Arbeitsmaschine erfasst wird, wobei die erfasste Geschwindigkeit mit einem Grenzwert vergleichen wird, wobei in dem Schritt d. die Schließung der Kupplung nur angefordert wird, falls die aktuelle Geschwindigkeit kleiner als den Grenzwert ist.

7. Verfahren nach einem der Ansprüche 1 bis 6, wobei in dem Schritt b ein Druck an der ersten Hydromaschine (4) erfasst wird, wobei der Druck an der ersten Hydromaschine (4) die Größe ist, die von der Bremsleistung abhängt.

8. Verfahren nach einem der Ansprüche 1 bis 6, wobei die zweite und/oder die dritte Hydromaschine mit jeweils verstellbaren Verdrängungsvolumen versehen ist.

9. Steuereinheit (68), welche eingerichtet ist, ein Verfahren nach einem der Ansprüche 1 bis 7 auszuführen.

10. Arbeitsmaschine, die einen hydrostatischen Fahrantrieb (1) umfasst, wobei der hydrostatische Fahrantrieb mit einer ersten Hydromaschine (4) mit verstellbarem Verdrängungsvolumen und mit einer zweiten Hydromaschine (6) und einer dritten Hydromaschine (8) versehen ist, wobei die erste Hydromaschine mit einer Antriebsmaschine koppelbar oder gekoppelt ist, wobei das von der ersten Hydromaschine kommende Druckmittel an die zweite und an die dritte Hydromaschine (6, 8), die parallel zueinander angeordnet sind, gefördert werden kann, wobei die zweite und die dritte Hydromaschine (6, 8) mit mindestens einem anzutreibenden Rad (22) oder einer anzutreibenden Kette oder Achse (44) verbindbar oder verbunden sind, wobei die Arbeitsmaschine eine Steuereinheit nach Anspruch 9 umfasst.

11. Computerprogramm, das dazu eingerichtet ist, das Verfahren nach einem der Ansprüche 1 bis 8 auszuführen und/oder zu steuern.

12. Maschinenlesbares Speichermedium mit einem darauf gespeicherten Computerprogramm nach Anspruch 11.

Fig. 1

**Fig. 2**

Fig. 3

$$B, R$$

$$|a| > a_{ref}$$

$$p_D > p_{Dref}$$

$$A$$

106

Fig. 4

Europäisches Patentamt
European Patent Office
Office européen des brevets

# EUROPÄISCHER RECHERCHENBERICHT

**Nummer der Anmeldung**

EP 24 16 0757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 58 958 A1 (KOMATSU MFG CO LTD [JP]) 17. Juni 1999 (1999-06-17) | 1,7-12 | INV. F16H47/02 F16H61/4157 F16H61/444 |
| A | * Spalte 10, Zeilen 42-56 * * Spalte 16, Zeile 35 - Spalte 17, Zeile 21 * * Abbildungen 1,2A,2B * ----- | 2-6 | |
| A | DE 10 2019 209266 A1 (BOSCH GMBH ROBERT [DE]) 31. Dezember 2020 (2020-12-31) * das ganze Dokument * ----- | 1-12 | |
| A | EP 3 954 926 A1 (BOSCH GMBH ROBERT [DE]) 16. Februar 2022 (2022-02-16) * das ganze Dokument * ----- | 1-12 | |

**RECHERCHIERTE SACHGEBIETE (IPC)**

F16H

Der vorliegende Recherchenbericht wurde für alle Patentansprüche erstellt

| Recherchenort | Abschlußdatum der Recherche | Prüfer |
|---|---|---|
| München | 16. Juli 2024 | Meritano, Luciano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 0757

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2024

| Im Recherchenbericht angeführtes Patentdokument | Datum der Veröffentlichung | Mitglied(er) der Patentfamilie | Datum der Veröffentlichung |
|---|---|---|---|
| DE 19858958      A1 | 17-06-1999 | DE      19858958 A1<br>US      6276134 B1 | 17-06-1999<br>21-08-2001 |
| DE 102019209266 A1 | 31-12-2020 | KEINE | |
| EP 3954926       A1 | 16-02-2022 | DE 102020210196 A1<br>EP      3954926 A1 | 17-02-2022<br>16-02-2022 |

EPO FORM P0461

Für nähere Einzelheiten zu diesem Anhang : siehe Amtsblatt des Europäischen Patentamts, Nr.12/82